# EUROPEAN PATENT APPLICATION

(11) **EP 1 484 156 A1**
(43) Date of publication of application: **08.12.2004**
(21) Application number: 03712697.6
(22) Date of filing: 14.03.2003
(51) Int. Cl.: B29C 45/26, B29C 45/00

(54) **METAL MOLD FOR INJECTION MOLDING AND METHOD OF MANUFACTURING INJECTION MOLDED PART**

(30) Priority: 14.03.2002 JP 2002070552; 20.03.2002 JP 2002079239; 25.03.2002 JP 2002083016
(71) Applicant: NISSHA PRINTING CO., LTD., Nakagyo-ku Kyoto-shi Kyoto 604-8551 (JP)
(72) Inventor: HAMANO, Koji, c/o NISSHA PRINTING CO., LTD., Kyoto-shi, Kyoto 604-8551 (JP); YAMAMOTO, Isao, c/o NISSHA PRINTING CO., LTD., Kyoto-shi, Kyoto 604-8551 (JP)
(74) Representative: HOFFMANN - EITLE
(86) International application number: PCT/JP2003/003041
(87) International publication number: WO 2003/076162

(57) **Abstract**

An injection molded article (15) which has a transfer layer (29) bonded onto and integrated with a surface thereof and in which a sectional shape of a part of a corner of a top surface of the injection molded article where a radius r of curvature is the smallest satisfies conditions of R < D and 0.1 ≤ rRA/D ≤ 10, or R ≥ D and 0.2 ≤ rR/D ≤ 30, or 0.01 ≤ rRR₂A/H ≤ 1.0, wherein R is a radius of curvature of the corner of the top surface, D is a distance between the top surface and a reference surface, A is a draft at a parting corner, R₂ is a radius of curvature at the parting corner, and H is a distance between a top surface of a recessed part and the reference surface.

## Description

### Technical Field

The present invention relates to an injection molded article having a transfer layer bonded on and integrated with surfaces thereof, such as upper and lower covers of portable telephone, surface component and outer periphery component of electronic toy, input panel of rice cooker, interior and exterior panels of motor car, and outer frame of pachinko machine, a method of manufacturing the same, and injection molds.

### Background Art

As a method of decorating not only a top surface but side surfaces of an injection molded article, conventionally, there has been used a method in which transfer layers are bonded on and integrated with the surfaces of the injection molded article simultaneously with injection molding.

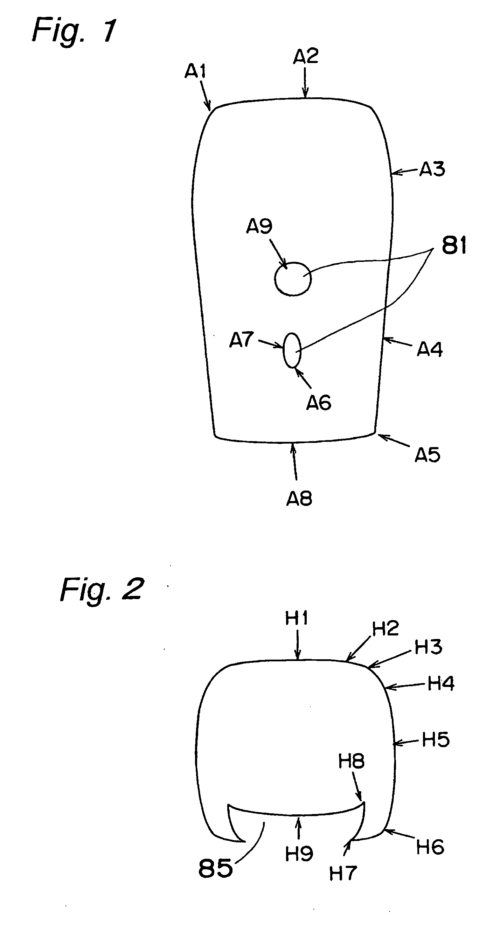

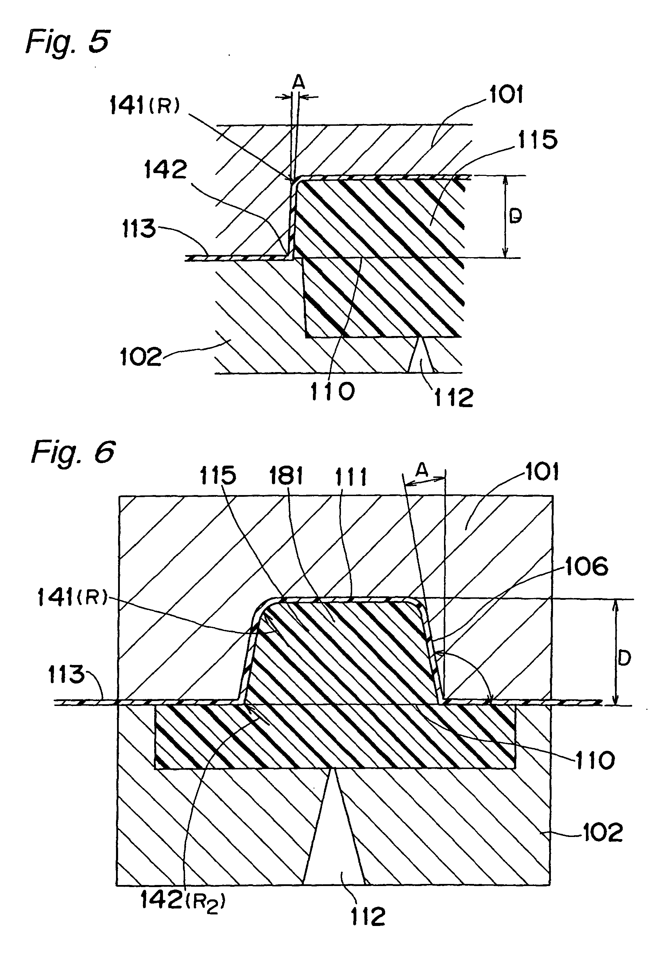

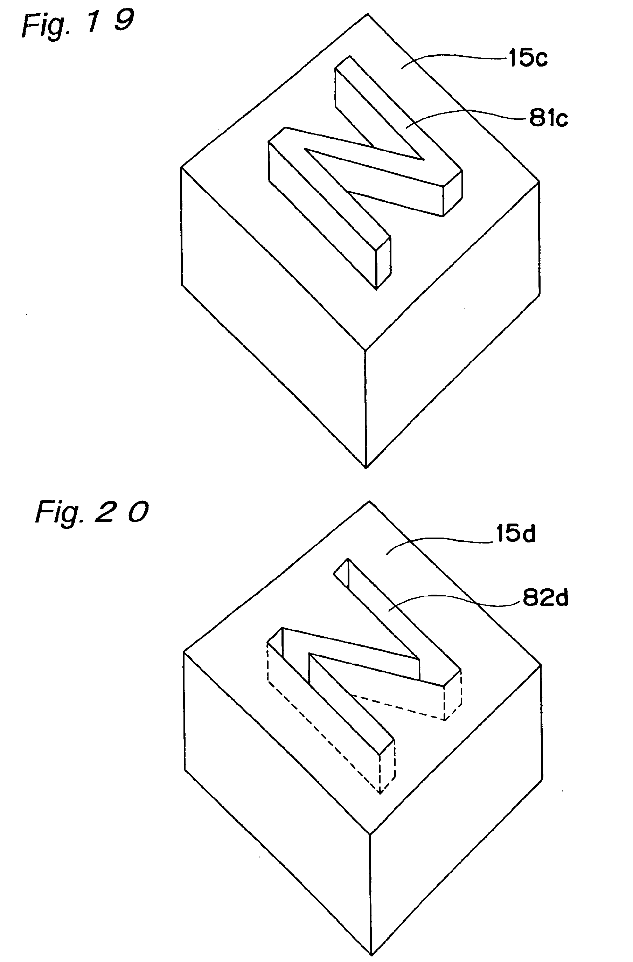

For a shape of an outer peripheral or inner peripheral surface of an injection molded article, in most cases, different parts often have different radii r of curvature (radii of curvature at corners of an outer peripheral or inner peripheral top surface of the injection molded article in plan view)(for example, in such injection molded articles as shown in Figs. 1, 2, 3, 4, and 7 which can be molded in accordance with the present invention but are difficult to mold in accordance with the prior arts). Accordingly, the bonding and integration of transfer layers with surfaces of such an injection molded article cause following issues in a part where the radius r of curvature is the smallest.
(1) On condition that a sectional shape of the injection molded article tends to have a large distance D (a distance from the outer peripheral or inner peripheral top surface to a reference surface in the injection molded article in section), a large distance H (a distance from a top surface of a recessed part to the reference surface thereof in the injection molded article in section), small radii R of curvature (radii of curvature at corners of the outer peripheral or inner peripheral top surface of the injection molded article in section), small radii R₂ of curvature at parting corners of outer periphery or inner periphery (hole) of the injection molded article in section, and small drafts A (drafts at the parting corners of the outer periphery or inner periphery of the injection molded article in section) (see Fig. 5, Fig. 6, and an injection molded article in Fig. 14 that can be molded in accordance with the present invention but is difficult to mold in accordance with the prior arts), it may be difficult to pull out the injection molded article from the injection molds and there may occur an ink crack 200 in a transfer layer 29 and a break in a transfer member 20 (a break 201 in the transfer layer 29 and a break 202 in a substrate sheet 21) (see Fig. 10) because molding resin is forced into the corners having steep angles. Herein, "reference surface" refers to a plane on which a movable mold and a fixed mold are brought into contact with each other, with the transfer member therebetween, in clamping. If there are a plurality of planes on which a movable mold and a fixed mold are brought into contact with each other, as shown in Fig. 12, a plane that most leans to a side of the fixed mold is determined as the reference surface.
(2) On condition that a sectional shape of the injection molded article tends to be small in the distance D and in the distance H and tends to be large in the radii R of curvature, the radii R₂ of curvature, and the drafts A (see Fig. 8, Fig. 9, and the injection molded article in Fig. 14 that can be molded in accordance with the present invention but is difficult to mold in accordance with the prior arts), a contour of a top surface of an outer periphery or inner periphery (recessed part) of the obtained injection molded article is made indistinct and the article is made poor in designability.

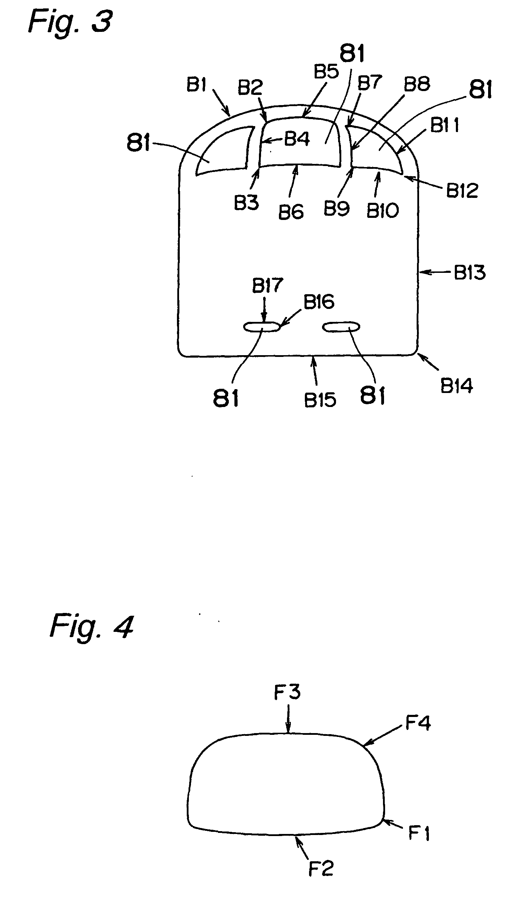

Herein, the radii r of curvature refer to radii of curvature of a top surface of an outer periphery or inner periphery (hole) of an injection molded article in plan view (for example, see radii A1 through A9 of curvature in Fig. 1, radii H1 through H9 of curvature in Fig. 2, radii B1 through B17 of curvature in Fig. 3, and radii F1 through F4 of curvature in Fig. 4 in injection molded articles that can be molded in accordance with the present invention but are difficult to mold in accordance with the prior arts), and the radii r of curvature are expressed in units of mm. The radii R of curvature refer to radii of curvature at corners of a top surface of an outer periphery or inner periphery (hole) of an injection molded article in section (see Fig. 5, Fig. 6, Fig. 8, and Fig. 9) and are expressed in units of mm. The radii R₂ of curvature refer to radii of curvature at parting corners of an outer periphery or inner periphery (hole) of an injection molded article in section (see Fig. 6 and Fig. 9) and are expressed in units of mm. The distance D and the distance H refer to a distance from a top surface of an outer periphery or inner periphery (recessed part) to a reference surface in an injection molded article in section (see Fig. 5, Fig. 6, Fig. 8, and Fig. 9) and are expressed in units of mm. The drafts A refer to drafts at parting corners of an outer periphery or inner periphery (recessed part) of an injection molded article in section) (see Fig. 5, Fig. 6, Fig. 8, and Fig. 9) and are expressed in units of degrees (°).

An object of the present invention is to solve the above issues and to provide injection molds and a method of manufacturing an injection molded article by which the injection molded article is obtained that sustains no ink crack in a transfer layer and no break in a transfer member and that is excellent in designability with a clear contour of a top surface of an outer periphery or inner periphery (recessed part) thereof.

### Disclosure Of Invention

In order to achieve the object, the present invention is configured as follows.

According to a first aspect of the present invention, there is provided an injection molded article which has a transfer layer bonded onto and integrated with a surface thereof and
in which a sectional shape of a part of the injection molded article where a radius r of curvature is smallest satisfies R < D and 0.1 ≤ rRA/D ≤ 10,
wherein the radius r of curvature is a radius (mm) of curvature of a top surface on an outer periphery or an inner periphery of the injection molded article in plan view, R is a radius (mm) of curvature of the top surface on the outer periphery or the inner periphery of the injection molded article in sectional view, D is a height (mm) from the top surface on the outer periphery or the inner periphery of the injection molded article to a reference surface in sectional view, and A is a draft (°) at a parting corner on the outer periphery or the inner periphery of the injection molded article in sectional view.

According to a second aspect of the present invention, there is provided an injection molded article which has a transfer layer bonded onto and integrated with a surface thereof and
in which a sectional shape of a part of the injection molded article where a radius r of curvature is smallest satisfies R ≥ D and 0.2 ≤ rR/D ≤ 30,
wherein the radius r of curvature is a radius (mm) of curvature of a top surface on an outer periphery or an inner periphery of the injection molded article in plan view, R is a radius (mm) of curvature of the top surface on the outer periphery or the inner periphery of the injection molded article in sectional view, and D is a height (mm) from the top surface on the outer periphery or the inner periphery of the injection molded article to a reference surface in sectional view.

According to a third aspect of the present invention, there is provided an injection molded article which has a transfer layer bonded onto and integrated with a surface thereof and has a protruding part or a recessed part formed on the surface, and
in which a sectional shape of a part of the protruding part or the recessed part where a radius r of curvature is smallest satisfies 0.01 ≤ rRR₂A/H ≤ 1.0,
wherein the radius r of curvature is a radius (mm) of curvature of a top surface of the protruding part or the recessed part of the injection molded article in plan view, R is a radius (mm) of curvature of the top surface of the protruding part or the recessed part of the injection molded article in sectional view, R₂ is a radius (mm) of curvature of a bottom of the protruding part or the recessed part of the injection molded article in sectional view, H is a height (mm) from the top surface of the protruding part or the recessed part of the injection molded article to a reference surface in sectional view, and A is a draft (°) at a top surface corner of the protruding part or the recessed part of the injection molded article in sectional view.

According to a fourth aspect of the present invention, there is provided an injection molded article as defined in the first aspect, wherein at least one of the radii R of curvature, the drafts A, and the distances D of the injection molded article are identical in all parts.

According to a fifth aspect of the present invention, there is provided an injection molded article as defined in the second aspect, wherein at least one of the radii R of curvature and the distances D of the injection molded article are identical in all parts.

According to a sixth aspect of the present invention, there is provided an injection molded article as defined in the third aspect, wherein at least one of the radii R of curvature, the radii R of curvature and the radii R₂ of curvature, the drafts A, and the heights H of the injection molded article are identical in all parts.

According to a seventh aspect of the present invention, there is provided an injection molded article as defined in the first aspect, wherein a sectional shape of a part having a smallest radius r of curvature in a first region (I) of the injection molded article satisfies R < D and 0.1 ≤ rRA/D ≤ 10, and wherein a sectional shape of a part having a smallest radius r of curvature in a second region (II) different from the first region satisfies R ≥ D and 0.2 ≤ rR/D ≤ 30, wherein the radius r of curvature in the second region is a radius (mm) of curvature of a top surface on the outer periphery or the inner periphery of the injection molded article in plan view, R in the second region is a radius of curvature of the top surface on the outer periphery or the inner periphery of the injection molded article in sectional view, and D in the second region is a height (mm) from the top surface on the outer periphery or the inner periphery of the injection molded article to a reference surface in sectional view.

According to an eighth aspect of the present invention, there is provided an injection molded article as defined in the first aspect, wherein a sectional shape of a part having a smallest radius r of curvature in a first region (I) of the injection molded article satisfies R < D and 0.1 ≤ rRA/D ≤ 10, and wherein a sectional shape of a part in which a radius r of curvature of a protruding part or a recessed part is smallest in a third region (III) different from the first region satisfies 0.01 ≤ rRR₂A/H ≤ 1.0,
wherein the radius r of curvature in the third region is a radius (mm) of curvature of a top surface on the protruding part or the recessed part of the injection molded article in plan view, R in the third region is a radius (mm) of curvature of the top surface of the protruding part or the recessed part of the injection molded article in sectional view, R₂ in the third region is a radius (mm) of curvature of a bottom of the protruding part or the recessed part of the injection molded article in sectional view, H in the third region is a height (mm) from the top surface of the protruding part or the recessed part of the injection molded article to a reference surface in sectional view, and A in the third region is a draft (°) at a top surface corner of the protruding part or the recessed part of the injection molded article in sectional view.

According to a ninth aspect of the present invention, there is provided an injection molded article as defined in the second aspect, wherein a sectional shape of a part having a smallest radius r of curvature in a second region (II) of the injection molded article satisfies R ≥ D and 0.2 ≤ rR/D ≤ 30, and wherein a sectional shape of a part in which a radius r of curvature of the protruding part or the recessed part is smallest in a third region (III) different from the second region satisfies 0.01 ≤ rRR₂A/H ≤ 1.0,
wherein the radius r of curvature in the third region is a radius (mm) of curvature of a top surface on the protruding part or the recessed part of the injection molded article in plan view, R in the third region is a radius (mm) of curvature of the top surface of the protruding part or the recessed part of the injection molded article in sectional view, R₂ in the third region is a radius (mm) of curvature of a bottom of the protruding part or the recessed part of the injection molded article in sectional view, H in the third region is a height (mm) from the top surface of the protruding part or the recessed part of the injection molded article to a reference surface in sectional view, and A in the third region is a draft (°) at a top surface corner of the protruding part or the recessed part of the injection molded article in sectional view.

According to a 10th aspect of the present invention, there is provided an injection molded article as defined in the first aspect, wherein a sectional shape of a part having a smallest radius r of curvature in a first region (I) of the injection molded article satisfies R < D and 0.1 ≤ rRA/D ≤ 10,
wherein a sectional shape of a part having a smallest radius r of curvature in a second region (II) different from the first region satisfies R ≥ D and 0.2 ≤ rR/D ≤ 30, wherein the radius r of curvature in the second region is a radius (mm) of curvature of a top surface on the outer periphery or the inner periphery of the injection molded article in plan view, R in the second region is a radius of curvature of the top surface on the outer periphery or the inner periphery of the injection molded article in sectional view, and D in the second region is a height (mm) from the top surface on the outer periphery or the inner periphery of the injection molded article to a reference surface in sectional view, and
wherein a sectional shape of a part in which a radius r of curvature of a protruding part or a recessed part is smallest in a third region (III) different from the first region and the second region satisfies 0.01 ≤ rRR₂A/H ≤ 1.0, wherein the radius r of curvature in the third region is a radius (mm) of curvature of a top surface on the protruding part or the recessed part of the injection molded article in plan view, R in the third region is a radius (mm) of curvature of the top surface of the protruding part or the recessed part of the injection molded article in sectional view, R₂ in the third region is a radius (mm) of curvature of a bottom of the protruding part or the recessed part of the injection molded article in sectional view, H in the third region is a height (mm) from the top surface of the protruding part or the recessed part of the injection molded article to a reference surface in sectional view, and A in the third region is a draft (°) at a top surface corner of the protruding part or the recessed part of the injection molded article in sectional view.

According to an 11th aspect of the present invention, there is provided a method of manufacturing an injection molded article, the method comprising of:
placing a transfer member having a transfer layer on a substrate sheet between a movable mold at least in contact with the transfer member and a fixed mold having a molding resin injection port;
injecting molding resin from the molding resin injection port into a molding space formed by closure of the movable mold and the fixed mold; and
forming the injection molded article with use of curved parts of the movable mold or the fixed mold so that a sectional shape of a part having a smallest radius r of curvature in the injection molded article satisfies R < D and 0.1 ≤ rRA/D ≤ 10, wherein the radius r of curvature is a radius (mm) of curvature of a top surface on an outer periphery or an inner periphery of the injection molded article in plan view, R is a radius (mm) of curvature of the top surface on the outer periphery or the inner periphery of the injection molded article in sectional view, D is a height (mm) from the top surface on the outer periphery or the inner periphery of the injection molded article to a reference surface in sectional view, and A is a draft (°) at a parting corner on the outer periphery or the inner periphery of the injection molded article in sectional view, and simultaneously bonding and integrating the transfer layer onto and with a surface of the injection molded article having the sectional shape with the radius r of curvature.

According to a 12th aspect of the present invention, there is provided a method of manufacturing an injection molded article, the method comprising of:
placing a transfer member having a transfer layer on a substrate sheet between a movable mold at least in contact with the transfer member and a fixed mold having a molding resin injection port;
injecting molding resin from the molding resin injection port into a molding space formed by closure of the movable mold and the fixed mold; and
forming the injection molded article with use of curved parts of the movable mold or the fixed mold so that a sectional shape of a part having a smallest radius r of curvature in the injection molded article satisfies R ≥ D and 0.2 ≤ rR/D ≤ 30, wherein the radius r of curvature is a radius (mm) of curvature of a top surface on an outer periphery or an inner periphery of the injection molded article in plan view, R is a radius (mm) of curvature of the top surface on the outer periphery or the inner periphery of the injection molded article in sectional view, and D is a height (mm) from the top surface on the outer periphery or the inner periphery of the injection molded article to a reference surface in sectional view and simultaneously bonding and integrating the transfer layer onto and with a surface of the injection molded article having the sectional shape with the radius r of curvature.

According to a 13th aspect of the present invention, there is provided a method of manufacturing an injection molded article, the method comprising of:
placing a transfer member having a transfer layer on a substrate sheet between a movable mold at least in contact with the transfer member and a fixed mold having a molding resin injection port;
injecting molding resin from the molding resin injection port into a molding space formed by closure of the movable mold and the fixed mold; and
forming the injection molded article with use of curved parts of the movable mold or the fixed mold so that a sectional shape of a part having a smallest radius r of curvature in the injection molded article satisfies 0.01 ≤ rRR₂A/H ≤ 1.0, wherein the radius r of curvature is a radius (mm) of curvature of a top surface of a protruding part or a recessed part of the injection molded article in plan view, R is a radius (mm) of curvature of the top surface of the protruding part or the recessed part of the injection molded article in sectional view, R₂ is a radius (mm) of curvature of a bottom of the protruding part or the recessed part of the injection molded article in sectional view, H is a height (mm) from the top surface of the protruding part or the recessed part of the injection molded article to a reference surface in sectional view, and A is a draft (°) at a top surface corner of the protruding part or the recessed part of the injection molded article in sectional view, and simultaneously bonding and integrating the transfer layer onto and with a surface of the injection molded article having the sectional shape with the radius r of curvature.

According to a 14th aspect of the present invention, there is provided injection molds comprising:
a movable mold at least in contact with a transfer member; and
a fixed mold having a molding resin injection port,
at least either one of the movable mold and the fixed mold having curved parts by which an injection molded article is molded such that a sectional shape of a part having a smallest radius r of curvature in the injection molded article satisfies R < D and 0.1 ≤ rRA/D ≤ 10,
wherein the radius r of curvature is a radius (mm) of curvature of a top surface on an outer periphery or an inner periphery of the injection molded article in plan view, R is a radius (mm) of curvature of the top surface on the outer periphery or the inner periphery of the injection molded article in sectional view, D is a height (mm) from the top surface on the outer periphery or the inner periphery of the injection molded article to a reference surface in sectional view, and A is a draft (°) at a parting corner on the outer periphery or the inner periphery of the injection molded article in sectional view,
wherein the transfer member having a transfer layer on a substrate sheet can be placed between the movable mold and the fixed mold, molding resin is injected from the molding resin injection port into a molding space formed by closure of the movable mold and the fixed mold, and the transfer layer is bonded onto and integrated with a surface of the injection molded article simultaneous with formation of the injection molded article.

According to a 15th aspect of the present invention, there is provided injection molds comprising:
a movable mold at least in contact with a transfer member and
a fixed mold having a molding resin injection port,
at least either one of the movable mold and the fixed mold having curved parts by which an injection molded article is molded such that a sectional shape of a part having a smallest radius r of curvature in the injection molded article satisfies R ≥ D and 0.2 ≤ rR/D ≤ 30, wherein the radius r of curvature is a radius (mm) of curvature of a top surface on an outer periphery or an inner periphery of the injection molded article in plan view, R is a radius (mm) of curvature of the top surface on the outer periphery or the inner periphery of the injection molded article in sectional view, and D is a height (mm) from the top surface on the outer periphery or the inner periphery of the injection molded article to a reference surface in sectional view,
wherein the transfer member having a transfer layer on a substrate sheet can be placed between the movable mold and the fixed mold, molding resin is injected from the molding resin injection port into a molding space formed by closure of the movable mold and the fixed mold, and the transfer layer is bonded onto and integrated with a surface of the injection molded article simultaneous with formation of the injection molded article.

According to a 16th aspect of the present invention, there is provided injection molds comprising:
a movable mold at least in contact with a transfer member and
a fixed mold having a molding resin injection port,
at least either one of the movable mold and the fixed mold having curved parts by which an injection molded article is molded such that a sectional shape of a part having a smallest radius r of curvature in the injection molded article satisfies 0.01 ≤ rRR₂A/H ≤ 1.0, wherein the radius r of curvature is a radius (mm) of curvature of a top surface of a protruding part or a recessed part of the injection molded article in plan view, R is a radius (mm) of curvature of the top surface of the protruding part or the recessed part of the injection molded article in sectional view, R₂ is a radius (mm) of curvature of a bottom of the protruding part or the recessed part of the injection molded article in sectional view, H is a height (mm) from the top surface of the protruding part or the recessed part of the injection molded article to a reference surface in sectional view, and A is a draft (°) at a top surface corner of the protruding part or the recessed part of the injection molded article in sectional view),
wherein the transfer member having a transfer layer on a substrate sheet can be placed between the movable mold and the fixed mold, molding resin is injected from the molding resin injection port into a molding space formed by closure of the movable mold and the fixed mold, and the transfer layer is bonded onto and integrated with a surface of the injection molded article simultaneous with formation of the injection molded article.

### Brief Description Of Drawings

These and other aspects and features of the present invention will become clear from the following description taken in conjunction with the preferred embodiments thereof with reference to the accompanying drawings, in which:
Fig. 1 is a plan view showing an upper cover of a portable telephone device that is an example of an injection molded article in accordance with a first embodiment of the present invention;
Fig. 2 is a plan view showing an upper cover of a portable telephone that is another example of the injection molded article in accordance with the first embodiment of the present invention;
Fig. 3 is a plan view showing a lower cover of a portable telephone that is still another example of the injection molded article in accordance with the first embodiment of the present invention;
Fig. 4 is a plan view showing a lower cover of a portable telephone that is still another example of the injection molded article in accordance with the first embodiment of the present invention;
Fig. 5 is a sectional view, partially broken away, showing an example of a conventional injection molded article and conventional injection molds;
Fig. 6 is a sectional view, partially broken away, showing an example of a conventional injection molded article and conventional injection molds;

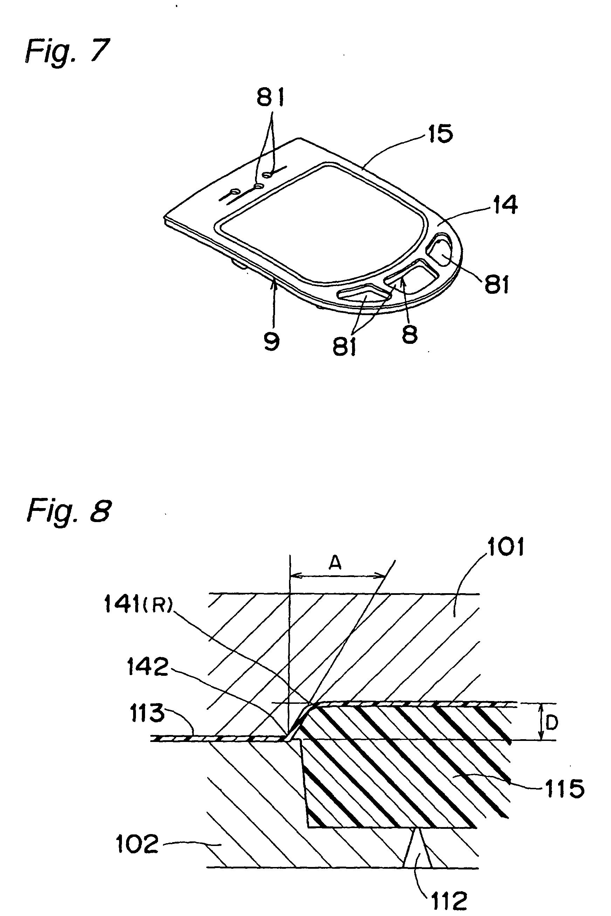

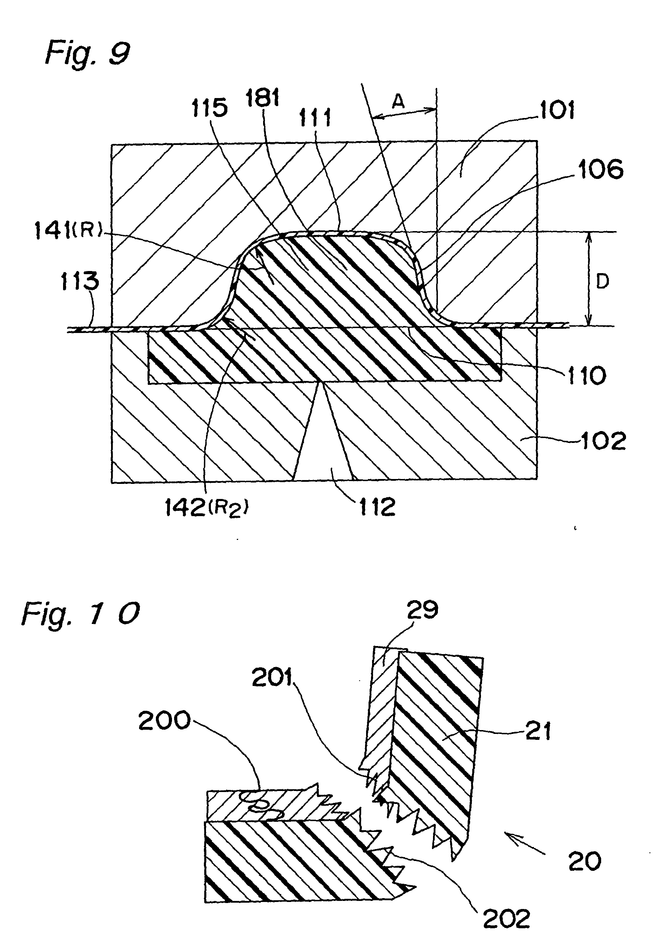

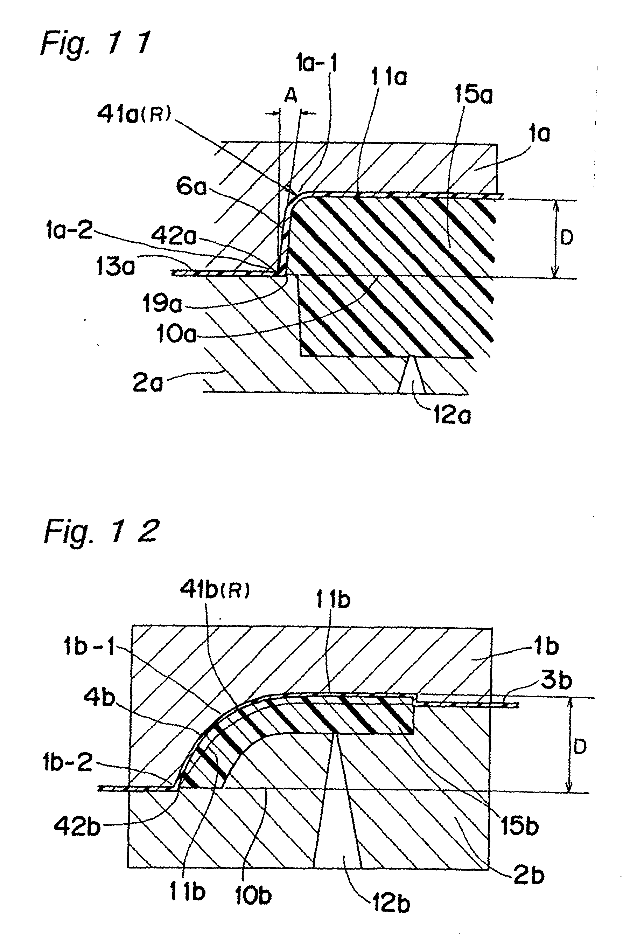

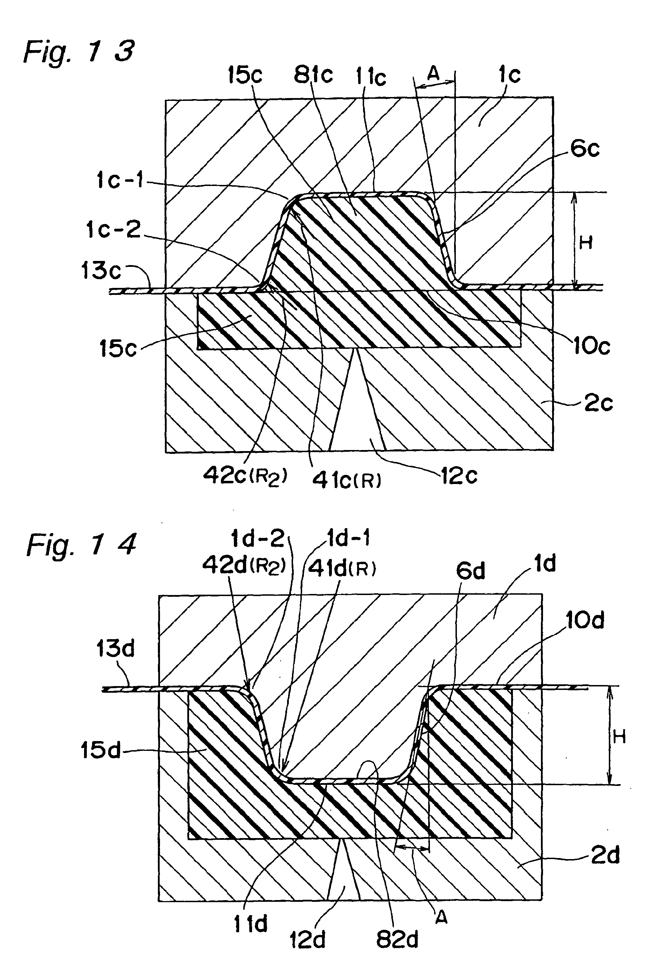

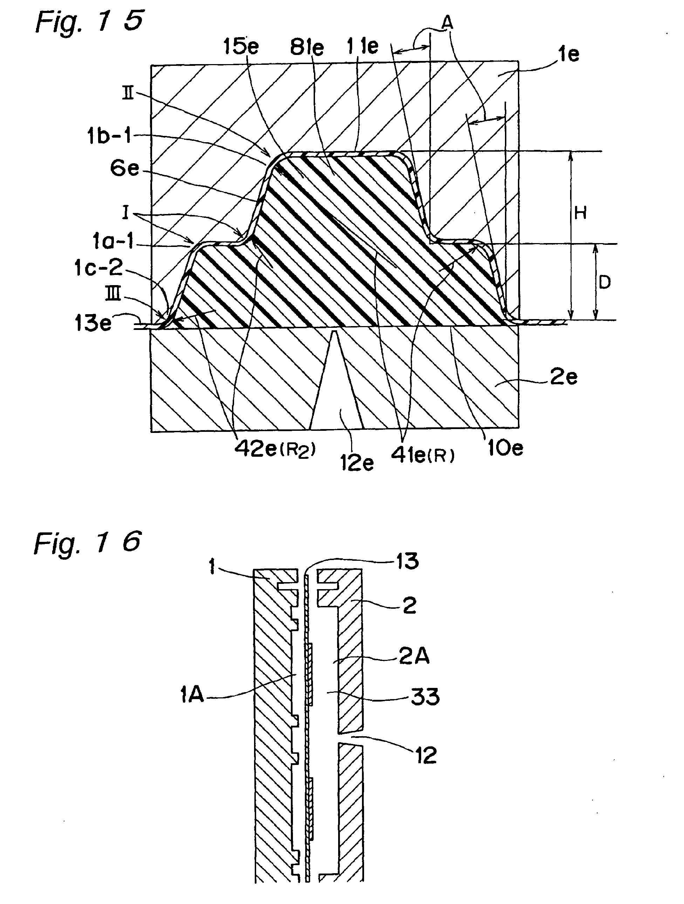

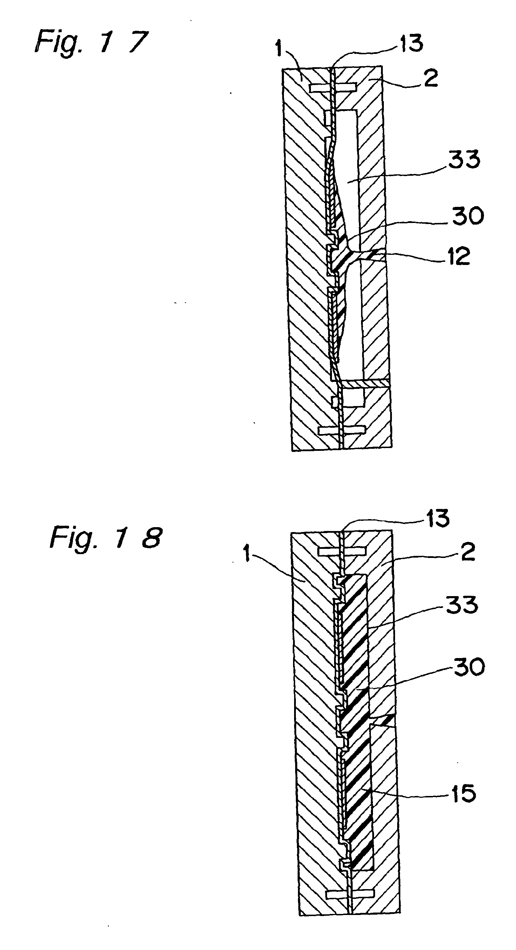

Fig. 7 is a perspective view of the injection molded article of Fig. 3;
Fig. 8 is a sectional view, partially broken away, showing an example of a conventional injection molded article and conventional injection molds;
Fig. 9 is a sectional view, partially broken away, showing an example of a conventional injection molded article and conventional injection molds;
Fig. 10 is an explanatory drawing showing a crack in a transfer layer and a break in a transfer member that have been caused by a conventional injection molded article and conventional injection molds;
Fig. 11 is a sectional view, partially broken away, showing an example of an injection molded article and injection molds in accordance with the first embodiment of the present invention;
Fig. 12 is a sectional view showing an example of an injection molded article and injection molds in accordance with a second embodiment of the present invention;
Fig. 13 is a sectional view showing an example of an injection molded article and injection molds in accordance with a third embodiment of the present invention;
Fig. 14 is a sectional view showing an example of an injection molded article and injection molds in accordance with the third embodiment of the present invention;
Fig. 15 is a sectional view showing an example of an injection molded article and injection molds in accordance with a fourth embodiment of the present invention;
Fig. 16 is a sectional view showing a step of a method of manufacturing the injection molded article in accordance with each of the first through fourth embodiments of the present invention;
Fig. 17 is a sectional view showing a step of the method of manufacturing the injection molded article in accordance with the embodiment of the present invention, subsequent to Fig. 16;
Fig. 18 is a sectional view showing a step of the method of manufacturing the injection molded article in accordance with the embodiment of the present invention, subsequent to Fig. 17;
Fig. 19 is a perspective view of the injection molded article of Fig. 13;

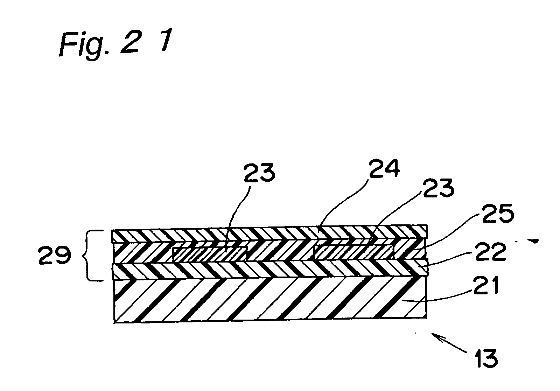

Fig. 20 is a perspective view of the injection molded article of Fig. 14;
Fig. 21 is a sectional view showing an example of a transfer member that is used in each of the first through fourth embodiments of the present invention;

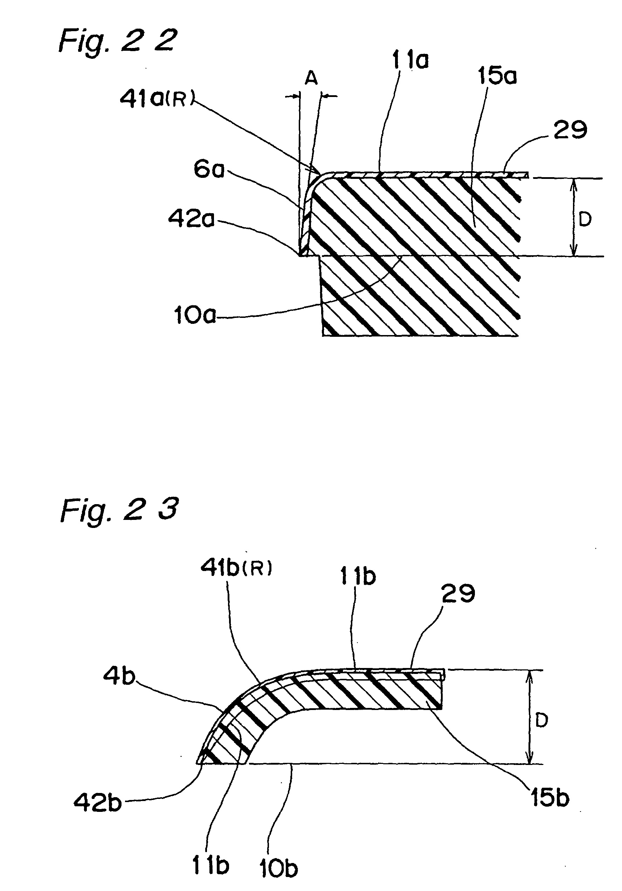

Fig. 22 is a sectional view of the injection molded article in accordance with the first embodiment of the present invention that is obtained as a result of injection molding in Fig. 11;
Fig. 23 is a sectional view of the injection molded article in accordance with the second embodiment of the present invention that is obtained as a result of injection molding in Fig. 12;

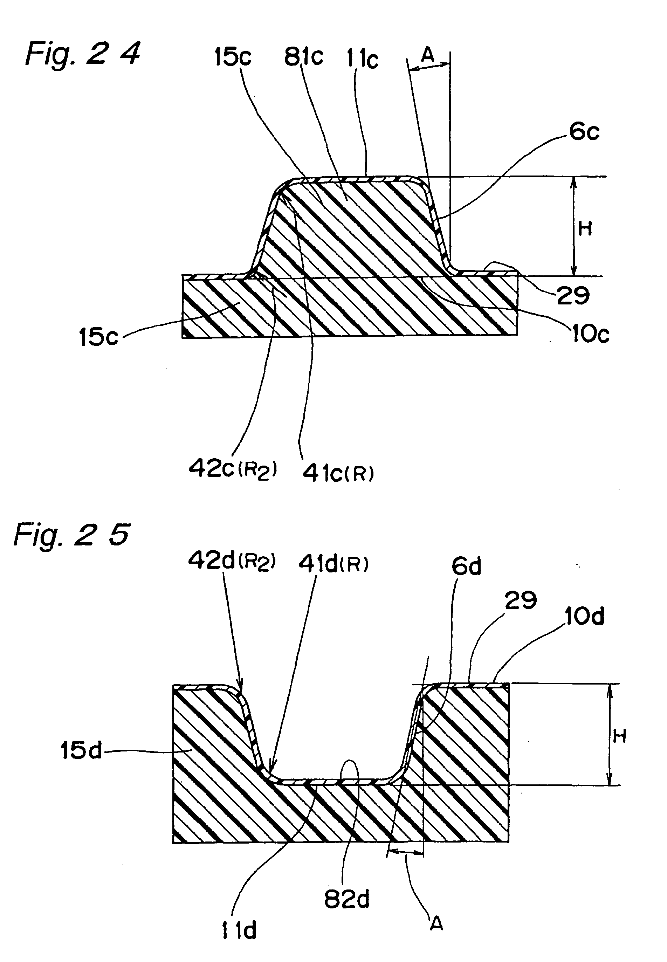

Fig. 24 is a sectional view of the injection molded article in accordance with the third embodiment of the present invention that is obtained as a result of injection molding in Fig. 13;

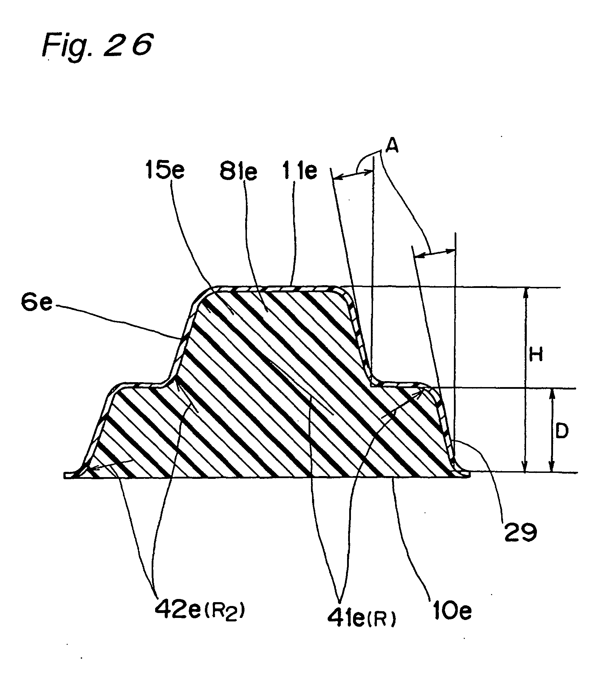

Fig. 25 is a sectional view of the injection molded article in accordance with the third embodiment of the present invention that is obtained as a result of injection molding in Fig. 14; and
Fig. 26 is a sectional view of the injection molded article in accordance with the fourth embodiment of the present invention that is obtained as a result of injection molding in Fig. 15.

### Best Mode for Carrying Out the Invention

Before the description of the present invention proceeds, it is to be noted that like parts are designated by like reference numerals throughout the accompanying drawings.

Hereinbelow, various embodiments of the present invention will be described in detail with reference to the drawings. Fig. 11 is a sectional view, partially broken away, showing an example of an injection molded article and injection molds of a first embodiment of the present invention, Fig. 12 is a sectional view showing an example of an injection molded article and injection molds of a second embodiment of the present invention, Fig. 13 is a sectional view showing an example of an injection molded article and injection molds of a third embodiment of the present invention, Fig. 14 is a sectional view showing an example of an injection molded article and injection molds of the third embodiment of the present invention, and Fig. 15 is a sectional view showing an example of an injection molded article and injection molds of a fourth embodiment of the present invention.

Initially, the injection molded article of the first embodiment of the present invention will be described. The injection molded article of the first embodiment of the present invention is an injection molded article 15a having a transfer layer of a transfer member 13a bonded onto and integrated with a surface thereof, as shown in Fig. 11, the injection molded article 15a satisfying specific conditions below. Figs. 1 through 4 are plan views showing an upper cover of a portable telephone that is an example of the injection molded article of the first embodiment of the present invention, Fig. 2 is a plan view showing an upper cover of a portable telephone that is another example of the injection molded article of the first embodiment of the present invention, Fig. 3 is a plan view showing a lower cover of a portable telephone that is still another example of the injection molded article of the first embodiment of the present invention, and Fig. 4 is a plan view showing a lower cover of a portable telephone that is still another example of the injection molded article of the first embodiment of the present invention. Reference numerals 81 denote holes and numeral 85 denotes a cutout.

Herein, a radius (mm) of curvature at a corner 41a of a top surface 11a of an outer periphery or inner periphery of the injection molded article 15a in plan view (specifically, see the radii A1 through A9 of curvature in Fig. 1, the radii H1 through H9 of curvature in Fig. 2, the radii B1 through B17 of curvature in Fig. 3, and the radii F1 through F4 of curvature in Fig. 4, for example) is represented as "r," a radius (mm) of curvature at the corner 41a of the top surface 11a of the outer periphery or inner periphery of the injection molded article 15a in section is represented as "R," a distance (mm) from the.top surface 11a of the outer periphery or inner periphery to a reference surface 10a in the injection molded article 15a in section is represented as "D," and a draft (°) at a parting corner 42a of the outer periphery or inner periphery of the injection molded article 15a in section is represented as "A." When an expression R < D holds, a straight side surface 6a exists in vicinity of bottom of the outer periphery of the injection molded article 15a, and the draft A is equivalent to an angle between the straight side surface 6a and a plane orthogonal to the bottom 19a. In the first embodiment, an in-depth experiment has proven that the radius r of curvature, the radius R of curvature, and the draft A are inversely proportional to one another and that those are directly proportional to a square of the distance D. In the first embodiment, that is to say, an injection molded article that sustains no ink crack in a transfer layer and no break in a transfer member and that is excellent in designability with a clear contour of a top surface of an outer periphery or inner periphery (recessed part) thereof is obtained by selection of a part of the injection molded article 15a where the radius r of curvature is the smallest (e.g., parts with the radius A5 of curvature in Fig. 1, the radius H7 of curvature in Fig. 2, the radius B7 of curvature in Fig. 3, and the radius F1 of curvature in Fig. 4) and by satisfaction of relational expressions R < D and 0.1 ≤ rRA/D ≤ 10 in a section of the part.

In the part of the injection molded article 15a where the radius r of curvature is the smallest, that is, the radius R of curvature is required to be as large as possible or the draft A is required to be large so that a shape of the section may satisfy the above relational expressions. On condition that the radius R of curvature coincides with the distance D (in an injection molded article 15b of the second embodiment in Fig. 12) or on condition that the radius R of curvature is larger than the distance D (i.e., R ≥ D), however, the section becomes having an arc shape without the straight part and makes it impossible to define the draft A and to apply the relational expressions of the first embodiment. In such a case, an injection molded article that sustains no ink crack in a transfer layer and no break in a transfer member and that is excellent in designability with a clear contour of a top surface of an outer periphery or inner periphery (recessed part) thereof is obtained by exclusion of the draft A from the relational expressions in accordance with the second embodiment, that is, by selection of a part of the injection molded article where the radius r of curvature is the smallest and by satisfaction of a relational expression 0.2 ≤ rR/D ≤ 30 in a section of the part.

In the second embodiment, character "r" denotes a radius (mm) of curvature at a corner 41b of a top surface 11b of an outer periphery or inner periphery of the injection molded article 15b in plan view (specifically, corresponding to the radii A1 through A9 of curvature in Fig. 1, the radii H1 through H9 of curvature in Fig. 2, the radii B1 through B17 of curvature in Fig. 3, and the radii F1 through F4 of curvature in Fig. 4, for example), character "R" denotes a radius (mm) of curvature at the corner 41b of the top surface 11b of the outer periphery or inner periphery of the injection molded article 15b in section, and character "D" denotes a distance (mm) from the top surface 11b of the outer periphery or inner periphery to a reference surface 10b in the injection molded article 15b in section.

As the third embodiment of the present invention, an embodiment is conceivable in which the inner periphery of the injection molded article is not pierced but only recessed, that is, in which a protruding part 81c such as a protruding character is formed on a top surface 11c of an injection molded article 15c (see Figs. 13 and 19). Reference character 13c denotes a transfer member, character 1c denotes a movable mold, character 41c denotes a top surface corner (having a radius R of curvature), character 6c denotes a straight part, character 10c denotes a reference surface, character 2c denotes a fixed mold, character 12c denotes an injection port, and character 42c denotes a parting corner (having a radius R₂ of curvature). On the contrary, an embodiment is conceivable in which a recessed part 82d such as groove and recessed character is formed on a top surface 11d of an injection molded article 15d (see Figs. 14 and 20). Reference character 13d denotes a transfer member, character 1d denotes a movable mold, character 41d denotes a top surface corner (having a radius R of curvature), character 6d denotes a straight part, character 10d denotes a reference surface, character 2d denotes a fixed mold, character 12d denotes an injection port, and character 42d denotes a parting corner (having a radius R₂ of curvature). In the third embodiment, account has to be taken of the radius R₂ of curvature of the parting corner 42c, 42d in the protruding part 81c or the recessed part 82d and of a distance H from the top surface 11c, 11d of the protruding part 81c or the recessed part 82d to the reference surface 10c, 10d in the injection molded article 15c, 15d in section, and relational expressions thereof are therefore different from those of the first embodiment and the second embodiment. In the third embodiment, that is, the injection molded article that sustains no ink crack in a transfer layer and no break in the transfer member and that is excellent in designability with a clear contour of the top surface of an outer periphery or inner periphery (recessed part) thereof is obtained by selection of a part of the protruding part 81c or the recessed part 82d of the injection molded article 15c, 15d where the radius r of curvature is the smallest and by satisfaction of a relational expression 0.01 ≤ rRR₂A/H ≤ 1.0 in a section shape of the part.

Reference character "r" denotes the radius (mm) of curvature at the corner 41c, 41d of the top surface 11c, 11d of the outer periphery or inner periphery of the injection molded article 15c, 15d in plan view (specifically, corresponding to the radii A1 through A9 of curvature in Fig. 1, the radii H1 through H9 of curvature in Fig. 2, the radii B1 through B17 of curvature in Fig. 3, and the radii F1 through F4 of curvature in Fig. 4, for example), character "R" denotes the radius (mm) of curvature at the corner 41c, 41d of the top surface 11c, 11d of the outer periphery or inner periphery of the injection molded article 15c, 15d in section, and character "D" denotes a distance (mm) from the top surface 11c, 11d of the outer periphery or inner periphery to the reference surface 10c, 10d in the injection molded article 15c, 15d in section, character "A" denotes a draft (°) at the parting corner 42c, 42d of the outer periphery or inner periphery of the injection molded article 15c, 15d in section, character "R₂" denotes the radius (mm) of curvature at a bottom, i.e., the parting corner 42c, 42d of the protruding part 81c or the recessed part 82d of the injection molded article 15c, 15d in section, and character "H" denotes a height (mm) from the top surface 11c, 11d of the protruding part 81c or the recessed part 82d to the reference surface 10c, 10d in the injection molded article 15c, 15d in section.

The relational expressions of the first to third embodiments apply only to the part of the injection molded article 15a, 15b, 15c, 15d where the radius r of curvature is the smallest (corresponding to the parts with the radius A5 of curvature in Fig. 1, the radius H7 of curvature in Fig. 2, the radius B7 of curvature in Fig. 3, and the radius F1 of curvature in Fig. 4, for example), and the relational expressions do not have to be satisfied in parts with larger radii r of curvature and in straight parts (the radius A4 of curvature in Fig. 1 and the radii B13 and B15 of curvature in Fig. 4). That is, the radii R of curvature, the radii R₂ of curvature, and the drafts A of the parts having larger radii r of curvature and of the straight parts may be made smaller than the radius R of curvature, the radius R₂ of curvature, and the draft A of the part having the smallest radius r of curvature, or the distances D or the distances H in the parts having larger radii r of curvature and in the straight parts may be made larger than the distance D or the distance H in the part having the smallest radius r of curvature, so that the relational expressions may be satisfied. Alternatively, at least one of the radii R of curvature, the radii R₂ of curvature, the drafts A, the distances D, and the distances H in the parts having larger radii r of curvature and in the straight parts may be equal to at least one of the radius R of curvature, the radius R₂ of curvature, the draft A, the distance D, and the distance H in the part having the smallest radius r of curvature.

To make variation in the radius R of curvature, the radius R₂ of curvature, the draft A, the distance D, and the distance H among parts of an injection molded article causes enormous trouble in design and manufacture of the injection mold, and it is efficient and preferable to make at least one of the radii R of curvature, the radii R₂ of curvature, the drafts A, the distance D, and the distance H identical in all the parts of the injection molded article unless special circumstances exist. In the fourth embodiment of Fig. 15 in which the first to third embodiments are combined, as an example, an injection molded article 15e is divided into a first region I to which the first embodiment is applied, a second region II to which the second embodiment is applied, and a third region III to which the third embodiment is applied, and all of the radius R of curvature, the radius R₂ of curvature, the draft A, the distance D, and the distance H are identical in all the parts or all the regions of the injection molded article 15e. Such a configuration can significantly reduce the trouble in design and manufacture of injection molds in comparison with a configuration having variation in the radius R of curvature, the radius R₂ of curvature, the draft A, the distance D, and the distance H among parts of an injection molded article.

The fourth embodiment in which a plurality of parts according to the first to third embodiments exist in one injection molded article 15e requires the relational expressions to be satisfied in each of the parts or regions I, II, and III according to the first to third embodiments (see Fig. 15). Reference character 13e denotes a transfer member, character 81e denotes a protruding part, character 11e denotes a top surface, character 1e denotes a movable mold, character 41e denotes top surface corners (having radii R of curvature), character 6e denotes a straight part, character 10e denotes a reference surface, character 2e denotes a fixed mold, character 12e denotes an injection port, and character 42e denotes parting corners (having radii R₂ of curvature).

There are inside-and-outside relations between shapes of the injection molded articles 15a, 15b, 15c, 15d, and 15e and shapes of injection molds. That is, the radii r of curvature, the radii R of curvature, the distances D, the drafts A, and the distances H of the injection molded articles 15a, 15b, 15c, 15d, and 15e in accordance with the first to fourth embodiments of the present invention are determined by the shape of the radii r of curvature, the radii R of curvature, the distances D, the drafts A, and. the distances H of the movable molds 1a, 1b, 1c, 1d, and 1e, respectively. The injection molds for producing the injection molded articles 15a, 15b, 15c, 15d, and 15e in accordance with the first to fourth embodiments of the present invention will be described below. The injection molds in accordance with the first to fourth embodiments of the present invention are configured at least by the movable mold 1a, 1b, 1c, 1d, 1e that is brought into contact with transfer member 13a, 13b, 13c, 13d, 13e and the fixed mold 2a, 2b, 2c, 2d, 2e that has the molding resin injection port 12a, 12b, 12c, 12d, 12e (see Fig. 16). In Figs. 16 through 18 associated with description of the injection molds, the movable molds 1a, 1b, 1c, 1d, and 1e are shown as a movable mold 1, the fixed molds 2a, 2b, 2c, 2d, and 2e are shown as a fixed mold 2, the molding resin injection ports 12a, 12b, 12c, 12d, and 12e are shown as a molding resin injection port 12, and the transfer members 13a, 13b, 13c, 13d, and 13e are shown as a transfer member 13. Reference character 1A denotes a cavity on side of the movable mold 1, character 2A denotes a cavity on side of the fixed mold 2, numeral 30 denotes molding resin, and numeral 33 denotes a molding space.

Initially, consideration will be given in terms of whether it is difficult or easy to remove the injection molded article 15 from the movable mold 1 of the injection molds in accordance with the first to fourth embodiments of the present invention.

The larger the distance D or the distance H in the movable mold 1 is, the more difficult it is to remove the injection molded article 15 from the movable mold 1 because the injection molded article 15 is fitted into the greater depths. Conversely, the smaller the distance D or the distance H in the movable mold 1 is, the easier it is to remove the injection molded article 15 from the movable mold 1.

The smaller the radius R of curvature or the radius R₂ of curvature is, even if the distance D or the distance H in the movable mold 1 is small, the more difficult it is to remove the injection molded article 15 from the movable mold 1 because the corner has the steeper angle. Conversely, the larger the radius R of curvature or the radius R₂ of curvature is, even if the distance D or the distance H in the movable mold 1 is large, the easier it is to remove the injection molded article 15 from the movable mold 1 because the corner does not have an steep angle.

Even if the distance D or the distance H in the movable mold 1 is small or the radius R of curvature or the radius R₂ of curvature is large, a small draft A causes the injection molded article 15 to be tightened by the parting corner 42 of the movable mold 1 and thus makes it difficult to remove the injection molded article 15 from the movable mold 1. Even if the distance D or the distance H in the movable mold 1 is large or the radius R of curvature or the radius R₂ of curvature is small, conversely, a large draft A prevents the injection molded article 15 from being tightened by the parting corner 42 of the movable mold 1 and thus facilitates removal of the injection molded article 15 from the movable mold 1.

A test was actually carried out in comprehensive consideration of these viewpoints and a viewpoint as to what condition was preferable for preventing occurrence of ink cracks in the transfer layer 29 of the transfer member 13 and breaks in the transfer member 13 and occurrence of separation of the transfer member 13 from molding resin owing to poor adhesion between the transfer member 13 and the molding resin 30. As a result, the relational expressions of the first to third embodiments were introduced. The test was such that transfer layers were bonded onto and integrated with surfaces of injection molded articles with various radii r of curvature as shown in Figs. 1 through 4. In the test, specifically, the radius r of curvature and the distance D in each part were kept at desired values so far as possible, and setting ranges were examined in which change in the radius R of curvature and the draft A caused no problem.

Table 1 below shows results of tests on the radius A5 of curvature and the radius A6 of curvature in Fig. 1, Table 2 shows those on the radius H7 of curvature in Fig. 2, Table 3 shows those on the radius B7 of curvature in Fig. 3, and Table 4 shows those on the radius F1 of curvature and the radius F4 of curvature in Fig. 4. The radius A6 of curvature was selected because D > R was satisfied and because the part had the smallest radius r of curvature in the parts where measurement was carried out. The radius A5 of curvature was selected because D ≤ R was satisfied and because the part had the smallest value of r in the parts where the measurement was carried out. The radius H7 of curvature was selected because the part had the smallest radius r of curvature in the parts where the measurement was carried out. The radius B7 of curvature was selected because the part had the smallest radius r of curvature in the parts where the measurement was carried out. The radius F1 of curvature was selected because D > R was satisfied and because the part had the smallest radius r of curvature in the parts where the measurement was carried out. The radius F4 of curvature was selected because D ≤ R was satisfied and because the part had the smallest value of r in the parts where the measurement was carried out.

**Table 1**

| measured part | r | R | A | D | D-R | rRA/D | rR/D |
|---|---|---|---|---|---|---|---|
| A1 | 0.34 | 3.26 | 23.89 | 2.29 | -0.96 | | |
| A2 | 88.72 | 4.50 | 33.36 | 2.47 | -2.03 | | |
| A3 | 93.83 | 0.27 | 7.76 | 0.27 | 0.00 | | |
| A4 | 470.32 | 0.30 | 7.76 | 0.29 | -0.01 | | |
| A5 | 0.32 | 3.12 | 15.79 | 2.36 | -0.75 | | 0.4 |
| A6 | 1.05 | 0.25 | 7.00 | 0.26 | 0.01 | 7.18 | |
| A7 | 10.30 | 0.25 | 7.00 | 0.25 | 0.00 | | |
| A8 | 136.49 | 3.63 | 25.19 | 1.87 | -1.76 | | |
| A9 | 4.71 | 0.20 | 6.99 | 0.20 | 0.00 | | |

**Table 2**

| measured part | r | R | A | D | D-R | rRA/D | rR/D |
|---|---|---|---|---|---|---|---|
| H1 | 228.78 | 4.30 | 11.84 | 6.29 | 1.99 | | |
| H2 | 0.44 | 4.36 | 13.70 | 5.97 | 1.61 | | |
| H4 | 7.72 | 0.08 | 3.02 | 0.43 | 0.35 | | |
| H5 | 433.29 | 0.09 | 2.39 | 0.44 | 0.34 | | |
| H6 | 2.73 | 0.16 | 4.43 | 0.44 | 0.28 | | |
| H7 | 0.26 | 0.10 | 3.51 | 0.42 | 0.32 | 0.22 | |
| H8 | 0.67 | 0.08 | 9.47 | 0.18 | 0.09 | | |
| H9 | 17.49 | 0.10 | 2.99 | 0.61 | 0.51 | | |

**Table 3**

| measured part | r | R | A | D | D-R | rRA/D | rR/D |
|---|---|---|---|---|---|---|---|
| B1 | 60.76 | 0.33 | 7.87 | 0.37 | 0.05 | | |
| B2 | 44.75 | 0.31 | 7.02 | 0.35 | 0.05 | | |
| B3 | 34.08 | 0.29 | 7.85 | 0.40 | 0.11 | | |
| B4 | 298.76 | 0.29 | 7.01 | 0.37 | 0.08 | | |
| B5 | 61.43 | 0.33 | 7.12 | 0.35 | 0.03 | | |
| B6 | 105.27 | 0.31 | 7.00 | 0.37 | 0.07 | | |
| B7 | 0.18 | 0.29 | 7.52 | 0.35 | 0.06 | 1.12 | |
| B8 | 167.45 | 0.29 | 6.99 | 0.40 | 0.11 | | |
| B9 | 0.22 | 0.33 | 6.95 | 0.40 | 0.08 | | |
| B10 | 567.86 | 0.31 | 7.05 | 0.37 | 0.07 | | |
| B11 | 56.78 | 0.29 | 6.98 | 0.35 | 0.06 | | |
| B12 | 0.21 | 0.29 | 7.01 | 0.40 | 0.11 | | |
| B13 | ∞ | 0.33 | 7.65 | 0.37 | 0.05 | | |
| B14 | 1.98 | 0.31 | 7.00 | 0.37 | 0.07 | | |
| B15 | ∞ | 0.33 | 6.95 | 0.35 | 0.03 | | |
| B16 | 1.58 | 0.31 | 7.58 | 0.40 | 0.10 | | |
| B17 | ∞ | 0.29 | 7.26 | 0.37 | 0.08 | | |

**Table 4**

| measured part | r | R | A | D | D-R | rRA/D | rR/D |
|---|---|---|---|---|---|---|---|
| F1 | 0.50 | 0.30 | 6.75 | 0.31 | 0.01 | 3.26 | |
| F2 | 122.49 | 0.30 | 17.33 | 0.26 | -0.03 | | |
| F3 | 35.75 | 0.30 | 7.02 | 0.31 | 0.01 | | |
| F4 | 4.38 | 0.35 | 8.30 | 0.30 | -0.05 | | 5.07 |

In addition to the relational expressions of the first to third embodiments, there exists a tolerance for each of those parameters. Hereinbelow, the tolerance for each of those parameters will be described.

In the first embodiment, the draft A is preferably in a range of from 0.3° to 45°. On condition that the draft is larger than 45°, too large reduction in quantity of flow of molding resin hinders sufficient transmission of a pressure required for the transfer, especially in the parting corners, and thus causes poor adhesion between the transfer layer 29 and the molding resin. Among the drafts A not larger than 45°, the draft A is more preferably in a range of from 0.3° to 10° in order to ensure the sufficient transmission of the pressure required for the transfer and prevention of ink cracks in the transfer layer 29 and breaks in the transfer member 13. The draft A is preferably in a range of from 0.3° to 5° in order that the obtained injection molded article 15 may have such a shape that side surfaces thereof are concealed from plan view. The drafts A smaller than 0.3° make it difficult to remove the injection molded article 15 from the movable mold 1.

In the first and second embodiments, the distance D is preferably in a range of from 0.15 to 8.0 mm. The distances D smaller than 0.15 mm make it difficult to form the radius R of curvature and the draft A. On condition that the distance D is larger than 8.0 mm, both the draft A and the radius R of curvature are required to be made large in order to facilitate removal of the injection molded article 15 from the movable mold 1 and, consequently, the transfer member cannot be drawn fully and may be broken.

For the first and second embodiments, especially for an upper cover of a portable telephone and the like, there is a demand for an injection molded article (see Fig. 12) in which a large drop end with the distance D of several millimeters or larger is formed, and both the distance D and the radius R of curvature of such an injection molded article are required to be made large in order to satisfy the relational expressions. Herein, "drop end" refers to a part that has a plurality of surfaces on which the movable mold and the fixed mold are in contact with each other, as shown in Fig. 12, that is an end of an injection molded article satisfying a condition of D ≤ R, and that configures a reference surface.

As a result, the relational expressions of the second embodiment are applied to such an injection molded article, a parting line is formed so that areas of surfaces forming a side end surface of the movable mold gradually decrease as a surface forming a lowest end surface of the fixed mold is neared, and a parting corner is prone to have a shape having little parting line (see Fig. 12).

In the first and second embodiments, the distance D is more preferably in a range of from 0.3 to 2.0 mm. The distances D larger than 2.0 mm tend to make it difficult to prevent ink cracks in the transfer layer 29 and breaks in the transfer member 13, and thus require trial and error for countermeasures against that on occasion of molding. The distances D smaller than 0.3 mm decrease a quantity of expansion of the transfer member 13, deteriorate tearing of the transfer layer 29, and thus increase an amount of so-called foil fin that is excess transfer layer 29 adhering to the injection molded article 15. With increase in the amount of foil fin, the fin tends to be dispersed into the molds and may adhere onto subsequent injection molded articles 15.

In the first and second embodiments, the radius R of curvature is preferably in a range of from 0.05 to 2.0 mm when the radius R is smaller than the distance D (R < D). On condition that the radius R of curvature is smaller than 0.05 mm, the substrate sheet 21 is stretched too much by resin pressure of molding resin in curved parts in section, so that ink cracks may be caused in the transfer layer 29 and so that the transfer member 13 is prone to be broken. On condition that the radius R of curvature exceeds 2.0 mm, the straight part 6 is often eliminated and the relational expressions of the first embodiment and the third embodiment do not hold. As to the second embodiment (i.e., when R ≥ D holds), there is no upper limit to the radius R of curvature. As to the radius r of curvature in the first and second embodiments, 0.05 (mm) ≤ r holds. The radii r of curvature smaller than 0.05 (mm) make it difficult to prevent ink cracks in the transfer layer 29 and breaks in the transfer member 13 even if other parameters are manipulated. Upper limit of the radius is infinity. That is because there are such straight parts as B13, B15, and B17 in Table 3.

The injection molds in accordance with the third embodiment of the present invention are injection molds for forming the protruding part 81c or the recessed part 81d such as character, figure, symbol, and pattern on a surface of the injection molded article 15, and the injection molds have the protruding part 81c or the recessed part 81d on the top surface 11c, 11d of the movable mold 1c, 1d. In this configuration, preferably, the distance H is in a range of from 0.1 to 1.0 mm, the radius R of curvature is in a range of from 0.1 to 0.4 mm, the radius R₂ of curvature is in a range of from 0.1 to 0.4 mm, and the draft A is in a range from 2° to 30°.

In the third and fourth embodiments, the distance H refers to a distance from the top surface 11c, 11d to the reference surface 10c, 10d (see Fig. 13 and Fig. 14). On condition that the top surface 11e of the injection molded article 15e of the first or second embodiment has a shape of the third embodiment as the protruding part 81e (in the fourth embodiment), the distance H is larger than the distance D (see Fig. 15). On condition that the top surface 11a, 11b of the injection molded article 15a, 15b of the first or second embodiment has a shape of the third embodiment as the recessed part 81d, the distance H is smaller than the distance D (see Fig. 14).

In the third embodiment, the distances H smaller than 0.1 mm make it difficult to form the radius R of curvature, the radius R₂ of curvature, and the draft A, tend to make difference in level indistinctive, and make it difficult to recognize a state in which characters rise from the surface. The distances H larger than 1.0 mm make it difficult to remove the injection molded article 15 from the movable mold 1. Besides, degrees of bending and drawing of the transfer member are increased, ink cracks may be caused in the transfer layer, and wrinkles and breaks are prone to be caused in the transfer member (see Fig. 10).

On condition that the radius R of curvature is smaller than 0.1 mm in the third embodiment, the substrate sheet 21 is stretched too much by resin pressure of molding resin in a part having the curvature, so that ink cracks may be caused in the transfer layer 29 and so that the transfer member 13 is prone to be broken. On condition that the radius R of curvature is larger than 0.4 mm, too much gentleness in the corner makes it difficult to recognize a state in which characters rise from the surface.

On condition that the radius R₂ of curvature is smaller than 0.1 mm in the third embodiment, the substrate sheet 21 is stretched too much by resin pressure of molding resin in a part having the curvature, so that ink cracks may be caused in the transfer layer 29 and so that the transfer member 13 is prone to be broken. On condition that the radius R₂ of curvature is larger than 0.4 mm, too much gentleness in the corner makes it difficult to recognize a state in which characters rise from the surface.

On condition that the draft A is smaller than 2° in the third embodiment, degrees of bending and drawing of the transfer member are increased, ink cracks may be caused in the transfer layer, and wrinkles and breaks are prone to be caused in the transfer member (see Fig. 7). On condition that the draft A of the movable mold is larger than 30°, too gentle slope makes it difficult to recognize a state in which characters rise from the surface. Provided that large radius R of curvature and large radius R₂ of curvature in the protruding part or the recessed part eliminate the straight part on the side surface, a slope of a tangent at a point of inflection of the radius R of curvature and the radius R₂ of curvature is substituted for the draft A. As to the radius r of curvature in the third embodiment, 0.05 (mm) ≤ r holds. The radii r of curvature smaller than 0.05 (mm) make it difficult to prevent ink cracks in the transfer layer 29 and breaks in the transfer member 13 even if other parameters are manipulated. Upper limit of the radius is infinity. That is because there are such straight parts as B13, B15, and B17 in Table 3.

In the first through fourth embodiments, the most preferable combination of those elements is a combination of the distance H of 0.4 mm, the radius R of curvature of 0.15 mm, the radius R₂ of curvature of 0.15 mm, and the draft A of 15°.

Hereinbelow will be described a method of manufacturing the injection molded articles 15a through 15e (generally designated by numeral "15") in accordance with the first through fourth embodiments of the present invention.

The injection molds for molding the injection molded article 15 are configured so as to have the movable mold 1 with the cavity 1A and the fixed mold 2 with the cavity 2A. In the first embodiment, as shown in Figs. 11 and 15, the cavity 1A or 2A or the cavities 1A and 2A of at least either one or both of the movable mold 1 and the fixed mold 2 have curved parts 1a-1 and 1a-2 which are molded so that a sectional shape of a part of the injection molded article having the smallest radius r of curvature satisfies the expressions R < D and 0.1 ≤ rRA/D ≤ 10. In the second embodiment, as shown in Figs. 12 and 15, the cavity 1A or 2A or the cavities 1A and 2A of at least either one or both of the movable mold 1 and the fixed mold 2 similarly have curved parts 1b-1 and 1b-2 which are molded so that a sectional shape of a part of the injection molded article having the smallest radius r of curvature satisfies the expressions R ≥ D and 0.2 ≤ rR/D ≤ 30. In the third embodiment, as shown in Figs. 13, 14, and 15, the cavity 1A or 2A or the cavities 1A and 2A of at least either one or both of the movable mold 1 and the fixed mold 2 have curved parts 1c-1, 1c-2, 1d-1, 1d-2 which are molded so that a sectional shape of a part of the injection molded article having the smallest radius r of curvature satisfies the expression 0.01 ≤ rRR₂A/H ≤ 1.0. In the fourth embodiment, parts for molding the first to third regions I, II, and III to which the corresponding curved parts of the first to third embodiments appropriately correspond are provided with the corresponding curved parts.

Subsequently, the transfer member 13 having the transfer layer 29 on the substrate sheet 21 is placed between the movable mold 1 having the cavity 1A and the fixed mold 2 having the cavity 2A (Fig. 16). The transfer member 13 is placed so as to be inserted and held in appropriate position between the cavity 1A of the movable mold 1 and the cavity 2A of the fixed mold 2. A plurality of sheets of transfer member 13 may be fed and placed one by one or only required parts of a long film of transfer member 13 may intermittently and continually be fed and placed as they are without being cut.

On condition that the long film of transfer member 13 is used without being cut, positioning with use of a feeder having a positioning mechanism is preferably carried out so that the transfer member 13 and the injection molds may be in register. When the transfer member 13 is intermittently fed, it is advantageous to fix the transfer member 13 by the movable mold 1 and the fixed mold 2 after detection of positions of the transfer member 13 by a sensor, because the transfer member 13 can thereby be fixed in the same position at all times and because the transfer member 13 is thus prevented from being out of position.

After the positioning of the transfer member 13 is completed, the transfer member 13 is preformed and deformed along an inside surface of the cavity 1A of the movable mold 1 (Fig. 17). On condition that the plurality of sheets of transfer member 13 are fed one by one, the sheet may be deformed so as to fit in the cavity 1A of the movable mold 1 before being fed into the injection molds, then may be fed into the injection molds, and may be placed so as to fit in the cavity 1A of the movable mold 1. The preformation is preferably carried out with deformation of the transfer member 13 into a three-dimensional shape by vacuum forming, press forming, or the like.

Subsequently, the molding space 33 is formed by closure of the molds, molding resin 30 is injected into the molding space 33, an injection molded article 15 having a sectional shape with desired radii of curvature is formed with use of the curved parts and, at the same time, the transfer layer 29 of the transfer member 13 is bonded onto and integrated with a surface of the injection molded article 15 (Fig. 18).

After that, the movable mold 1 is moved relative to the fixed mold 2, and the injection molded article 15 is taken out. On a surface of the injection molded article 15 that has been taken out, the transfer layer 29 has been bonded onto and integrated with the solidified molding resin 30 by an adhesive layer 24, in the parts having the sectional shape with the desired radii of curvature in the same manner as in other parts. The injection molded articles 15a, 15b, 15c, 15d, and 15e of the first through fourth embodiments are shown in Figs. 22, 23, 24, 25, and 26, respectively.

For the molding resin 30 may be used acrylic resin, polystyrene resin, styrene-acrylonitrile resin, polycarbonate resin, polypropylene resin, polyethylene resin, polylactic acid resin, nylon resin, polyurethane resin, polyester resin, polymer alloy of those, or the like.

In a specific example of basic layer arrangement of the transfer member 13 that is used in the first to fourth embodiments of the present invention, a release layer 22, a pattern layer 23, a function layer 25, and the adhesive layer 24 are laminated on the substrate sheet 21 in order, and a laminate of the release layer 22, the pattern layer 23, the function layer 25, and the adhesive layer 24 forms the transfer layer 29 (see Fig. 21). Among materials for the substrate sheet 21 are resin sheets of acrylic resin, polyester resin, and the like.

As material of the pattern layer 23, there can be named acrylic resin, nitrocellulose resin, urethane resin, chlorinated rubber resin, vinyl chloride vinyl acetate copolymer resin, polyamide resin, polyester resin, epoxy resin, and the like; however, the material is not particularly limited thereto. In the pattern layer 23, a metal film layer of aluminum, chromium, copper, nickel, indium, tin, silicon oxide, or the like may be provided by vacuum deposition method, plating method, or the like. In this case, the metal film layer may cover the whole surface or may be patterned. A film thickness of the pattern layer 23 is preferably in a range of from 0.5 µm to 50 µm. That is because sufficient design cannot be achieved with the film thickness smaller than 0.5 µm and because drying after printing is difficult to perform with the film thickness larger than 50 µm. A film thickness of the metal film layer, however, is preferably in a range of from 50 Å to 1200 Å. That is because sufficient metallic luster cannot be obtained with the film thickness of the metal film layer smaller than 50 Å and because cracks are prone to occur with the film thickness larger than 1200 Å. Among methods for providing the pattern layer 23 on the whole surface or on a pattern are general printing methods such as gravure, screen process printing, and offset printing; tampon printing; painting; various coating methods; metal film forming methods such as vapor deposition, ion plating, and sputter technique; and the like.

Preferably used as material of the adhesive layer 24 is acrylic resin, nitrocellulose resin, urethane resin, chlorinated rubber resin, vinyl chloride vinyl acetate copolymer resin, polyamide resin, polyester resin, epoxy resin, polycarbonate resin, olefinic resin, acrylonitrile-butadien-styrene resin, or the like. A thickness of the adhesive layer 24 is preferably in a range of from 0.5 µm to 50 µm. That is because sufficient adhesiveness cannot be obtained with the film thickness smaller than 0.5 µm and because drying after printing is difficult to perform with the film thickness larger than 50 µm. A method of forming the adhesive layer 24 may be any of general printing methods such as gravure, offset printing, and screen process printing, painting, dipping, reverse coater, and the like.

Preferably used as material of the release layer 22 is acrylic resin, acetate resin, urethane resin, chlorinated rubber resin, vinyl chloride vinyl acetate copolymer resin, polyamide resin, polyester resin, epoxy resin, polycarbonate resin, olefinic resin, cyanoacrylate resin, or the like. A thickness of the release layer 22 is preferably in a range of from 0.5 µm to 50 µm. That is because sufficient adhesiveness cannot be obtained with the film thickness smaller than 0.5 µm and because drying after printing is difficult to perform with the film thickness larger than 50 µm.

The function layer 25 provided between the layers has functions of improving adherence between the layers, improving resistance against corrosion of the layers, and the like. Preferably used as material of the function layer 25 is thermosetting acrylic resin, thermosetting urethane resin, vinyl chloride vinyl acetate copolymer resin, polyamide resin, polyester resin, epoxy resin, or the like. A thickness of the function layer 25 is preferably in a range of from 0.5 µm to 50 µm. That is because the functions of improving adherence between the layers, improving resistance against corrosion of the layers, and the like cannot be achieved with the film thickness smaller than 0.5 µm and because drying after printing is difficult to perform with the film thickness larger than 50 µm. A method of forming the function layer 25 may be any of general printing methods such as gravure, offset printing, and screen process printing, painting, dipping, reverse coater, and the like.

In an injection molded article of the present invention, a transfer layer is bonded onto and integrated with a surface thereof, and it is characterized that a sectional shape of a part of the injection molded article where the radius r of curvature is the smallest satisfies conditions of R < D and 0.1 ≤ rRA/D ≤ 10, conditions of R ≥ D and 0.2 ≤ rR/D ≤ 30, or a condition of 0.01 ≤ rRR₂A/H ≤ 1.0. Provided that such condition(s) are satisfied, it is not difficult to remove the injection molded article from the injection molds even in the part where the radius r of curvature is the smallest, and molding resin is not forced into corners having steep angles. Accordingly, there is obtained the injection molded article that prevents occurrence of ink cracks in the transfer layer and breaks in the transfer member (breaks in the transfer layer and breaks in the substrate sheet) and that is excellent in designability with a clear contour of a top surface of an outer periphery or inner periphery (recessed part) thereof.

In the injection molded article of the present invention, any of the radii R of curvature, the radii R of curvature and the radii R₂ of curvature, the drafts A, and the distances D are identical in all the parts thereof. In the injection molded article of the present invention, any of the radii R of curvature, the radii R of curvature and the radii R₂ of curvature, the drafts A, and the distances D are identical in all the parts thereof. Thus an effect is achieved in that the injection molds can be designed and manufactured efficiently without much trouble.

In the method of manufacturing the injection molded article of the present invention, the transfer member having the transfer layer on the substrate sheet is placed between the movable mold at least in contact with the transfer member and the fixed mold having the molding resin injection port, molding resin is injected from the molding resin injection port into the molding space formed by closure of the molds, and thus the transfer layer is bonded onto and integrated with the surface of the injection molded article at the same time that the injection molded article is formed. Thus effects are achieved in that not only the injection molded article is easy to remove from the recessed part of the movable mold but also the injection molded article sustaining no ink crack in the transfer layer and no break in the transfer member is obtained.

The injection molds of the present invention are injection molds that are used in the method of manufacturing the injection molded article. Thus an effect is achieved in that there is obtained the injection molded article which prevents occurrence of ink cracks in the transfer layer and breaks in the transfer member and which is excellent in designability with a clear contour of the top surface of the outer periphery or inner periphery (recessed part) thereof.

By properly combining the arbitrary embodiments of the aforementioned various embodiments, the effects possessed by the embodiments can be produced.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An injection molded article (15a) which has a transfer layer (29) bonded onto and integrated with a surface thereof and
in which a sectional shape of a part of the injection molded article where a radius r of curvature is smallest satisfies R < D and 0.1 ≤ rRA/D ≤ 10,
wherein the radius r of curvature is a radius (mm) of curvature of a top surface (11a) on an outer periphery or an inner periphery of the injection molded article in plan view, R is a radius (mm) of curvature of the top surface on the outer periphery or the inner periphery of the injection molded article in sectional view, D is a height (mm) from the top surface on the outer periphery or the inner periphery of the injection molded article to a reference surface (10a) in sectional view, and A is a draft (°) at a parting corner (42a) on the outer periphery or the inner periphery of the injection molded article in sectional view.

2. An injection molded article (15b) which has a transfer layer (29) bonded onto and integrated with a surface thereof and
in which a sectional shape of a part of the injection molded article where a radius r of curvature is smallest satisfies R ≥ D and 0.2 ≤ rR/D ≤ 30,
wherein the radius r of curvature is a radius (mm) of curvature of a top surface (11b) on an outer periphery or an inner periphery of the injection molded article in plan view, R is a radius (mm) of curvature of the top surface on the outer periphery or the inner periphery of the injection molded article in sectional view, and D is a height (mm) from the top surface on the outer periphery or the inner periphery of the injection molded article to a reference surface (10b) in sectional view.

3. An injection molded article (15c, 15d) which has a transfer layer (29) bonded onto and integrated with a surface thereof and has a protruding part (81c) or a recessed part (81d) formed on the surface, and
in which a sectional shape of a part of the protruding part or the recessed part where a radius r of curvature is smallest satisfies 0.01 ≤ rRR₂A/H ≤ 1.0,
wherein the radius r of curvature is a radius (mm) of curvature of a top surface (11c, 11d) of the protruding part or the recessed part of the injection molded article in plan view, R is a radius (mm) of curvature of the top surface of the protruding part or the recessed part of the injection molded article in sectional view, R₂ is a radius (mm) of curvature of a bottom (19a) of the protruding part or the recessed part of the injection molded article in sectional view, H is a height (mm) from the top surface of the protruding part or the recessed part of the injection molded article to a reference surface (10c, 10d) in sectional view, and A is a draft (°) at a top surface corner (41c, 41d) of the protruding part or the recessed part of the injection molded article in sectional view.

4. An injection molded article as claimed in claim 1, wherein at least one of the radii R of curvature, the drafts A, and the distances D of the injection molded article are identical in all parts.

5. An injection molded article as claimed in claim 2, wherein at least one of the radii R of curvature and the distances D of the injection molded article are identical in all parts.

6. An injection molded article as claimed in claim 3, wherein at least one of the radii R of curvature, the radii R of curvature and the radii R₂ of curvature, the drafts A, and the heights H of the injection molded article are identical in all parts.

7. An injection molded article as claimed in claim 1, wherein a sectional shape of a part having a smallest radius r of curvature in a first region (I) of the injection molded article satisfies R < D and 0.1 ≤ rRA/D ≤ 10, and wherein a sectional shape of a part having a smallest radius r of curvature in a second region (II) different from the first region satisfies R ≥ D and 0.2 ≤ rR/D ≤ 30, wherein the radius r of curvature in the second region is a radius (mm) of curvature of a top surface (11b) on the outer periphery or the inner periphery of the injection molded article in plan view, R in the second region is a radius of curvature of the top surface on the outer periphery or the inner periphery of the injection molded article in sectional view, and D in the second region is a height (mm) from the top surface on the outer periphery or the inner periphery of the injection molded article to a reference surface (10b) in sectional view.

8. An injection molded article as claimed in claim 1, wherein a sectional shape of a part having a smallest radius r of curvature in a first region (I) of the injection molded article satisfies R < D and 0.1 ≤ rRA/D ≤ 10, and wherein a sectional shape of a part in which a radius r of curvature of a protruding part or a recessed part is smallest in a third region (III) different from the first region satisfies 0.01 ≤ rRR₂A/H ≤ 1.0,
wherein the radius r of curvature in the third region is a radius (mm) of curvature of a top surface (11c, 11d) on the protruding part or the recessed part of the injection molded article in plan view, R in the third region is a radius (mm) of curvature of the top surface of the protruding part or the recessed part of the injection molded article in sectional view, R₂ in the third region is a radius (mm) of curvature of a bottom (19a) of the protruding part or the recessed part of the injection molded article in sectional view, H in the third region is a height (mm) from the top surface of the protruding part or the recessed part of the injection molded article to a reference surface (10c, 10d) in sectional view, and A in the third region is a draft (°) at a top surface corner (41c, 41d) of the protruding part or the recessed part of the injection molded article in sectional view.

9. An injection molded article as claimed in claim 2, wherein a sectional shape of a part having a smallest radius r of curvature in a second region (II) of the injection molded article satisfies R ≥ D and 0.2 ≤ rR/D ≤ 30, and wherein a sectional shape of a part in which a radius r of curvature of the protruding part or the recessed part is smallest in a third region (III) different from the second region satisfies 0.01 ≤ rRR₂A/H ≤ 1.0,
wherein the radius r of curvature in the third region is a radius (mm) of curvature of a top surface (11c, 11d) on the protruding part or the recessed part of the injection molded article in plan view, R in the third region is a radius (mm) of curvature of the top surface of the protruding part or the recessed part of the injection molded article in sectional view, R₂ in the third region is a radius (mm) of curvature of a bottom (19a) of the protruding part or the recessed part of the injection molded article in sectional view, H in the third region is a height (mm) from the top surface of the protruding part or the recessed part of the injection molded article to a reference surface (10c, 10d) in sectional view, and A in the third region is a draft (°) at a top surface corner (41c, 41d) of the protruding part or the recessed part of the injection molded article in sectional view.

10. An injection molded article as claimed in claim 1, wherein a sectional shape of a part having a smallest radius r of curvature in a first region (I) of the injection molded article satisfies R < D and 0.1 ≤ rRA/D ≤ 10,
wherein a sectional shape of a part having a smallest radius r of curvature in a second region (II) different from the first region satisfies R ≥ D and 0.2 ≤ rR/D ≤ 30, wherein the radius r of curvature in the second region is a radius (mm) of curvature of a top surface (11b) on the outer periphery or the inner periphery of the injection molded article in plan view, R in the second region is a radius of curvature of the top surface on the outer periphery or the inner periphery of the injection molded article in sectional view, and D in the second region is a height (mm) from the top surface on the outer periphery or the inner periphery of the injection molded article to a reference surface (10b) in sectional view, and
wherein a sectional shape of a part in which a radius r of curvature of a protruding part or a recessed part is smallest in a third region (III) different from the first region and the second region satisfies 0.01 ≤ rRR₂A/H ≤ 1.0, wherein the radius r of curvature in the third region is a radius (mm) of curvature of a top surface (11c, 11d) on the protruding part or the recessed part of the injection molded article in plan view, R in the third region is a radius (mm) of curvature of the top surface of the protruding part or the recessed part of the injection molded article in sectional view, R₂ in the third region is a radius (mm) of curvature of a bottom (19a) of the protruding part or the recessed part of the injection molded article in sectional view, H in the third region is a height (mm) from the top surface of the protruding part or the recessed part of the injection molded article to a reference surface (10c, 10d) in sectional view, and A in the third region is a draft (°) at a top surface corner (41c, 41d) of the protruding part or the recessed part of the injection molded article in sectional view.

11. A method of manufacturing an injection molded article, the method comprising of:
placing a transfer member (13a) having a transfer layer (29) on a substrate sheet (21) between a movable mold (1a) at least in contact with the transfer member and a fixed mold (2a) having a molding resin injection port (12a);
injecting molding resin (30) from the molding resin injection port into a molding space (33) formed by closure of the movable mold and the fixed mold; and
forming the injection molded article (15a) with use of curved parts (1a-1, 1a-2) of the movable mold or the fixed mold so that a sectional shape of a part having a smallest radius r of curvature in the injection molded article satisfies R < D and 0.1 ≤ rRA/D ≤ 10, wherein the radius r of curvature is a radius (mm) of curvature of a top surface (11a) on an outer periphery or an inner periphery of the injection molded article in plan view, R is a radius (mm) of curvature of the top surface on the outer periphery or the inner periphery of the injection molded article in sectional view, D is a height (mm) from the top surface on the outer periphery or the inner periphery of the injection molded article to a reference surface (10a) in sectional view, and A is a draft (°) at a parting corner (42a) on the outer periphery or the inner periphery of the injection molded article in sectional view, and simultaneously bonding and integrating the transfer layer onto and with a surface of the injection molded article having the sectional shape with the radius r of curvature.

12. A method of manufacturing an injection molded article, the method comprising of:
placing a transfer member (13b) having a transfer layer (29) on a substrate sheet (21) between a movable mold (1b) at least in contact with the transfer member and a fixed mold (2b) having a molding resin injection port (12b);
injecting molding resin (30) from the molding resin injection port into a molding space (33) formed by closure of the movable mold and the fixed mold; and
forming the injection molded article (15b) with use of curved parts (1b-1, 1b-2) of the movable mold or the fixed mold so that a sectional shape of a part having a smallest radius r of curvature in the injection molded article satisfies R ≥ D and 0.2 ≤ rR/D ≤ 30, wherein the radius r of curvature is a radius (mm) of curvature of a top surface (11b) on an outer periphery or an inner periphery of the injection molded article in plan view, R is a radius (mm) of curvature of the top surface on the outer periphery or the inner periphery of the injection molded article in sectional view, and D is a height (mm) from the top surface on the outer periphery or the inner periphery of the injection molded article to a reference surface (10b) in sectional view and simultaneously bonding and integrating the transfer layer onto and with a surface of the injection molded article having the sectional shape with the radius r of curvature.

13. A method of manufacturing an injection molded article, the method comprising of:
placing a transfer member (13c, 13d) having a transfer layer (29) on a substrate sheet (21) between a movable mold (1c, 1d) at least in contact with the transfer member and a fixed mold (2c, 2d) having a molding resin injection port (12c, 12d);
injecting molding resin (30) from the molding resin injection port into a molding space (33) formed by closure of the movable mold and the fixed mold; and
forming the injection molded article (15c, 15d) with use of curved parts (1c-1, 1c-2, 1d-1, 1d-2) of the movable mold or the fixed mold so that a sectional shape of a part having a smallest radius r of curvature in the injection molded article satisfies 0.01 ≤ rRR₂A/H ≤ 1.0,
wherein the radius r of curvature is a radius (mm) of curvature of a top surface (11c, 11d) of a protruding part or a recessed part of the injection molded article in plan view, R is a radius (mm) of curvature of the top surface of the protruding part or the recessed part of the injection molded article in sectional view, R₂ is a radius (mm) of curvature of a bottom (19a) of the protruding part or the recessed part of the injection molded article in sectional view, H is a height (mm) from the top surface of the protruding part or the recessed part of the injection molded article to a reference surface (10c, 10d) in sectional view, and A is a draft (°) at a top surface corner (41c, 41d) of the protruding part or the recessed part of the injection molded article in sectional view, and simultaneously bonding and integrating the transfer layer onto and with a surface of the injection molded article having the sectional shape with the radius r of curvature.

14. Injection molds comprising:
a movable mold (1a) at least in contact with a transfer member (13a); and
a fixed mold (2a) having a molding resin injection port (12a),
at least either one of the movable mold and the fixed mold having curved parts (1a-1, 1a-2) by which an injection molded article is molded such that a sectional shape of a part having a smallest radius r of curvature in the injection molded article satisfies R < D and 0.1 ≤ rRA/D ≤ 10, wherein the radius r of curvature is a radius (mm) of curvature of a top surface (11a) on an outer periphery or an inner periphery of the injection molded article in plan view, R is a radius (mm) of curvature of the top surface on the outer periphery or the inner periphery of the injection molded article in sectional view, D is a height (mm) from the top surface on the outer periphery or the inner periphery of the injection molded article to a reference surface (10a) in sectional view, and A is a draft (°) at a parting corner (42a) on the outer periphery or the inner periphery of the injection molded article in sectional view,
wherein the transfer member having a transfer layer (29) on a substrate sheet (21) can be placed between the movable mold and the fixed mold, molding resin (30) is injected from the molding resin injection port into a molding space (33) formed by closure of the movable mold and the fixed mold, and the transfer layer is bonded onto and integrated with a surface of the injection molded article (15a) simultaneous with formation of the injection molded article.

15. Injection molds comprising:
a movable mold (1) at least in contact with a transfer member (13) and
a fixed mold (2) having a molding resin injection port (12),
at least either one of the movable mold and the fixed mold having curved parts (1b-1, 1b-2) by which an injection molded article is molded such that a sectional shape of a part having a smallest radius r of curvature in the injection molded article satisfies R ≥ D and 0.2 ≤ rR/D ≤ 30, wherein the radius r of curvature is a radius (mm) of curvature of a top surface (11b) on an outer periphery or an inner periphery of the injection molded article in plan view, R is a radius (mm) of curvature of the top surface on the outer periphery or the inner periphery of the injection molded article in sectional view, and D is a height (mm) from the top surface on the outer periphery or the inner periphery of the injection molded article to a reference surface (10b) in sectional view,
wherein the transfer member having a transfer layer (29) on a substrate sheet (21) can be placed between the movable mold and the fixed mold, molding resin (30) is injected from the molding resin injection port into a molding space (33) formed by closure of the movable mold and the fixed mold, and the transfer layer is bonded onto and integrated with a surface of the injection molded article (15b) simultaneous with formation of the injection molded article.

16. Injection molds comprising:
a movable mold (1) at least in contact with a transfer member (13) and
a fixed mold (2) having a molding resin injection port (12),
at least either one of the movable mold and the fixed mold having curved parts (1c-1, 1c-2, 1d-1, 1d-2) by which an injection molded article is molded such that a sectional shape of a part having a smallest radius r of curvature in the injection molded article satisfies 0.01 ≤ rRR₂A/H ≤ 1.0, wherein the radius r of curvature is a radius (mm) of curvature of a top surface (11c, 11d) of a protruding part or a recessed part of the injection molded article in plan view, R is a radius (mm) of curvature of the top surface of the protruding part or the recessed part of the injection molded article in sectional view, R₂ is a radius (mm) of curvature of a bottom (19a) of the protruding part or the recessed part of the injection molded article in sectional view, H is a height (mm) from the top surface of the protruding part or the recessed part of the injection molded article to a reference surface (10c, 10d) in sectional view, and A is a draft (°) at a top surface corner (41c, 41d) of the protruding part or the recessed part of the injection molded article in sectional view),
wherein the transfer member having a transfer layer (29) on a substrate sheet (21) can be placed between the movable mold and the fixed mold, molding resin (30) is injected from the molding resin injection port into a molding space (33) formed by closure of the movable mold and the fixed mold, and the transfer layer is bonded onto and integrated with a surface of the injection molded article (15b) simultaneous with formation of the injection molded article.
